# FASCICULE DE BREVET EUROPEEN

(11) **EP 0 762 074 B1**
(45) Date de publication et mention de la délivrance du brevet: **14.11.2001**
(21) Numéro de dépôt: 96401865.9
(22) Date de dépôt: 30.08.1996
(51) Int. Cl.: F42B 15/04, G02B 6/44, F41G 7/32, B64C 39/02

(54) **Système de télécommande d'un engin spatial filoguidé**
Fernbedienungssystem für eine mit einem Draht gesteuerte Rakete
Remote control system for a wire controlled missile

(30) Priorité: 05.09.1995 FR 9510385
(43) Date de publication de la demande: 12.03.1997
(73) Titulaire: AEROSPATIALE MATRA, 75016 Paris (FR)
(72) Inventeur: Barnier, Jean-François, 92320 Chatillon (FR)
(74) Mandataire: Dubois-Chabert, Guy

(56) Documents cités:
- EP-A- 0 337 880
- EP-A- 0 620 461
- DE-B- 1 122 402
- DE-C- 3 818 840
- FR-A- 2 654 204

## Description

### Domaine technique

La présente invention concerne un système de télécommande d'un engin spatial filoguidé.

### Etat de la technique antérieure

De nombreux engins spatiaux sont filoguidés, c'est-à-dire guidés par fils, à partir d'un poste de télécommande. Certains de ces engins, tels les missiles, sont prévus pour être détruits en fin de trajectoire, d'autres tels les aérodynes peuvent être réutilisés. Le fil de liaison sert à envoyer à l'engin volant, depuis le poste de commande, les signaux nécessaires à l'adaptation de sa trajectoire. Généralement le fil est alors enroulé sur un touret et situé à l'arrière de l'engin, de manière à se dévider à vitesse nulle par rapport au sol.

La référence [1] décrit ainsi un équipement d'un engin volant piloté par fil à partir d'un poste de commande. Cet équipement de bord est destiné à permettre la transmission bidirectionnelle par fil de signaux entre le poste de commande au sol et l'engin volant, et comporte un magasin pour une réserve de fil enroulée sur un tambour, muni d'un mécanisme de dévidage, certaines variantes comportent un système de rembobinage entraîné par un moteur réversible, un moyen dynamométrique détermine la traction exercée sur le fil et des moyens d'asservissement qui agissent sur le moteur pour éviter une rupture du fil, ou un mou excessif. En outre, l'équipement comporte souvent un appareil de navigation type "GPS" ("Global Positioning System" ou système de positionnement global) qui détermine les coordonnées relatives en altitude et distance horizontale de l'engin par rapport au poste de commande. Des moyens de calcul permettent de calculer la longueur de fil correspondant à une pente choisie au poste de commande, et de commander l'enroulement-dévidage pour ajuster la longueur déroulée.

Il existe des engins d'observation, équipés d'une caméra. Le fil de liaison permet alors un échange de signaux entre l'engin et le poste de commande, l'engin recevant des signaux de commande des paramètres de vol et d'orientation de la caméra, et émettant des signaux d'image.

Dans ce type d'application, l'usage d'un fil de liaison permet de s'affranchir de certaines contraintes des transmissions hertziennes à grand débit d'information, à savoir la nécessité d'antennes orientables directives, les risques de brouillage et d'indiscrétions, et le poids des émetteurs embarqués. Ce type d'engin a l'avantage d'être récupérable, dès lors que le retour de l'engin à sa base de départ ne conduit pas à une surcharge du fait des équipements nécessaires.

Différents documents de l'art antérieur sont cités en fin de description.

Ainsi la référence [2] décrit un magasin pour une fibre optique entre un engin volant téléguidé récupérable et un poste de commande au sol. Ce magasin, situé au poste de commande, comporte un touret, portant des spires de réserve du conducteur, équipé d'un moyen de dévidage-envidage couplé à un moteur, un détecteur de tension mécanique inséré sur un trajet du conducteur en sortie du touret et délivrant un signal image de tension, et un dispositif d'asservissement pilotant le moteur dans un sens qui ajuste le signal de tension sur un signal de consigne.

La référence [3] décrit un magasin à fil pour missile.

La référence [4] décrit un dispositif de dévidage d'un fil de liaison, qui dans ce cas est une fibre optique, comprenant un conduit flexible, utilisable notamment dans le domaine des missiles.

La référence [5] décrit un guide à anneaux multiples pour tester le dévidage de fibre optique.

La référence [6] décrit un système pour dévider une fibre optique.

La référence [7] décrit un système missile avec un tube de lancement télescopique.

La référence [8] décrit un dispositif de déroulement de câble de filotransmission d'une torpille sous-marine dans lequel le câble se dévide extérieurement à l'hélice motrice.

La référence [9] décrit une installation de conditionnement et de lancement d'un missile filoguidé à partir d'un sous-marin.

Afin de ne point perturber les images transmises la plupart des engins volant légers sont propulsés par une hélice placée à l'arrière de l'engin. Cette disposition impose un angle de sortie important de la fibre à l'arrière de l'engin, elle présente les inconvénients suivants :
- augmentation de l'importance des phénomènes de coup de fouet en phase départ ;
- augmentation des frottements subis par le fil de liaison au dévidage ;
- risque de casse du fil de liaison par l'hélice.

L'invention a pour objet de pallier ces différents inconvénients.

### Exposé de l'invention

La présente invention concerne un système de télécommande d'un engin spatial filoguidé comprenant un poste de commande permettant la télécommande, à l'aide d'un fil de liaison, de l'engin spatial mû par une hélice propulsive commandée par un moteur, caractérisé en ce que cette hélice comporte un axe creux permettant le dévidage du fil de liaison à travers cet axe.

Une telle solution présente les avantages suivants :
- minimisation de l'angle entre le fil et l'axe de l'engin spatial, d'où diminution des frottements en vol et en phase départ ;
- alignement du moteur et du noyau de bobinage du fil d'où diminution du diamètre de l'engin ;
- bon parallélisme du fil avec l'axe de la rampe de lancement ; ce qui entraîne une diminution des risques d'accrochage de celle-ci avec le système de lancement.

Avantageusement un conduit de guidage peut être disposé à l'intérieur de l'axe de l'hélice, ce qui permet de faire déboucher le fil relativement loin de l'hélice pour éviter toute perturbation aérodynamique.

Dans une variante de réalisation le poste de commande comporte un guidage télescopique permettant l'amortissement du fil de liaison en phase départ. Ce système de guidage peut être cylindrique, formé par exemple de tubes emboîtés. Le système de guidage peut également comporter simplement des anneaux de guidage.

Avantageusement le fil de télécommande peut être une fibre optique.

L'emploi d'une fibre optique comme fil de liaison présente les avantages suivants :
- quasi-insensibilité aux brouillages (électromagnétiques en particulier) ;
- débit important d'informations permettant l'emport d'une caméra et la transmission d'images en temps réel ;
- discrétion radio pour l'engin télécommandé et l'installation de commande au sol.

L'engin spatial peut être un missile, un drone, ou tout autre aérodyne.

### Brève description des dessins

- La figure 1 donne un schéma général d'un système de l'art antérieur ;
- la figure 2 illustre le système de l'invention ;
- la figure 3 illustre un exemple de réalisation du système de l'invention ;
- la figure 4 illustre une variante de réalisation du système de l'invention.

### Exposé détaillé de modes de réalisation

L'invention concerne un système de télécommande d'un engin spatial filoguidé 10, par exemple un missile, un drone ou tout autre aérodyne.

Un poste de commande, par exemple au sol, permet la télécommande de cet engin spatial mû par une hélice 11 commandée par un moteur, à l'aide d'un fil de liaison 12 qui peut avantageusement être une fibre optique.

L'invention consiste à équiper l'hélice propulsive 11 d'un arbre creux. Le fil 12 se dévide à l'intérieur de celui-ci. Un conduit de guidage 13 peut également être disposé à l'intérieur de cet arbre creux pour permettre le dévidage du fil 12. L'emploi de ce conduit de guidage 13 permet de faire déboucher le fil 12 relativement loin de l'hélice 11 pour éviter toute perturbation aérodynamique.

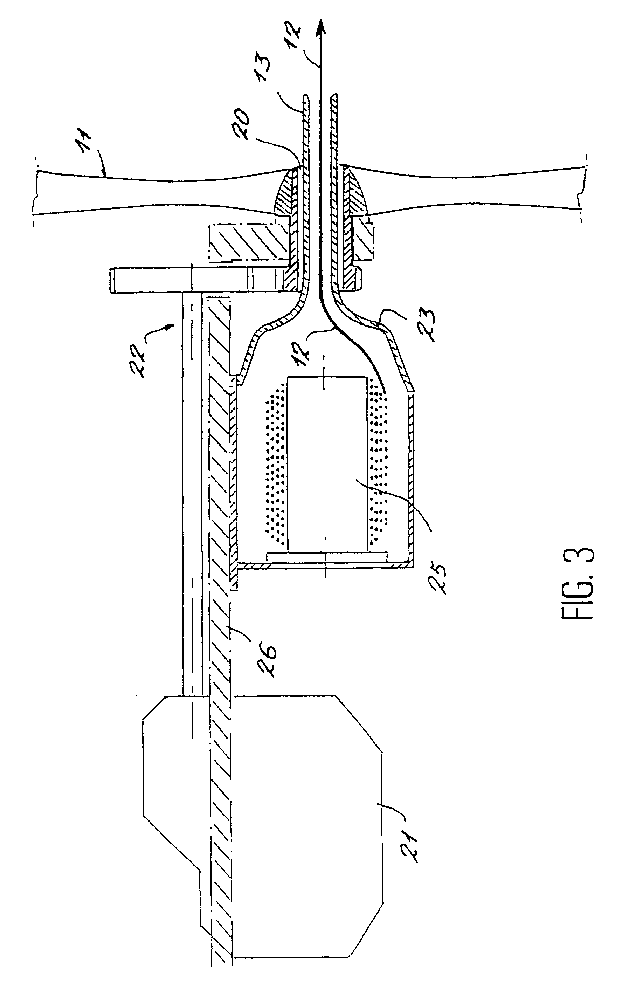

La figure 3 donne un exemple de configuration du système de l'invention, l'hélice 11 étant donc pourvue d'un axe creux 20. Le mouvement de cette hélice est commandé par un moteur 21 et d'un système de transmission 22, l'élément référencé 26 étant une poutre de fixation du moteur. Un convergent 23 se terminant par un conduit de guidage 13 permet le passage du fil 12 issu d'un noyau bobiné 25 à l'intérieur de l'axe creux 20.

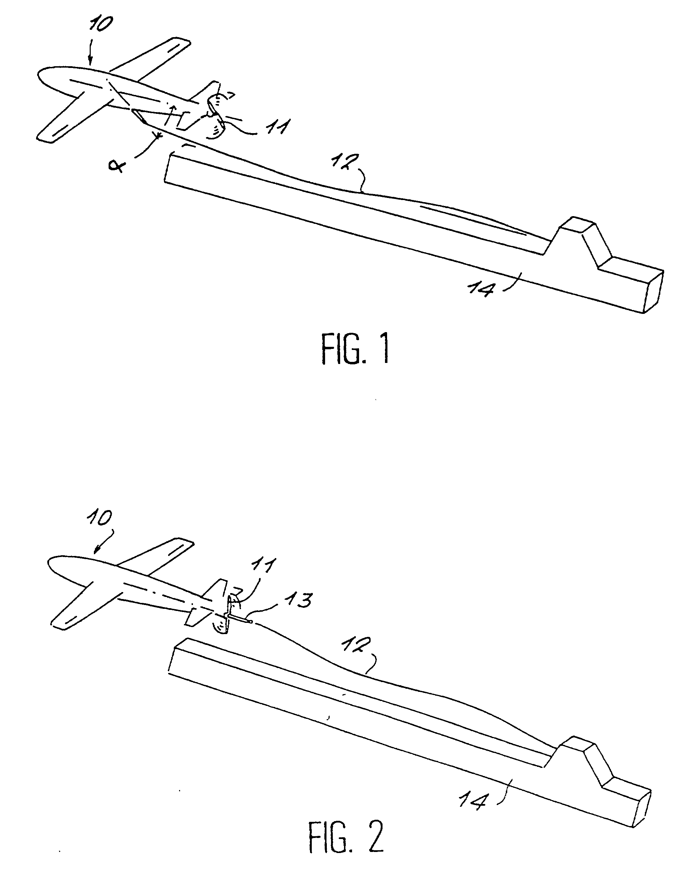

Une telle solution permet de minimiser l'angle α entre le fil 12 et l'axe de l'engin spatial 10, tel qu'il existait dans le dispositif de l'art antérieur représenté sur la figure 1. Le moteur 21 et le noyau bobiné 25 sont dans le prolongement l'un de l'autre, ce qui permet une diminution du diamètre de l'engin. Il y a, en phase départ, un bon parallélisme du fil de liaison 12 avec l'axe 11 de la rampe de lancement 14 et donc une diminution des risques d'accrochage du fil 12 de celle-ci avec le système de lancement.

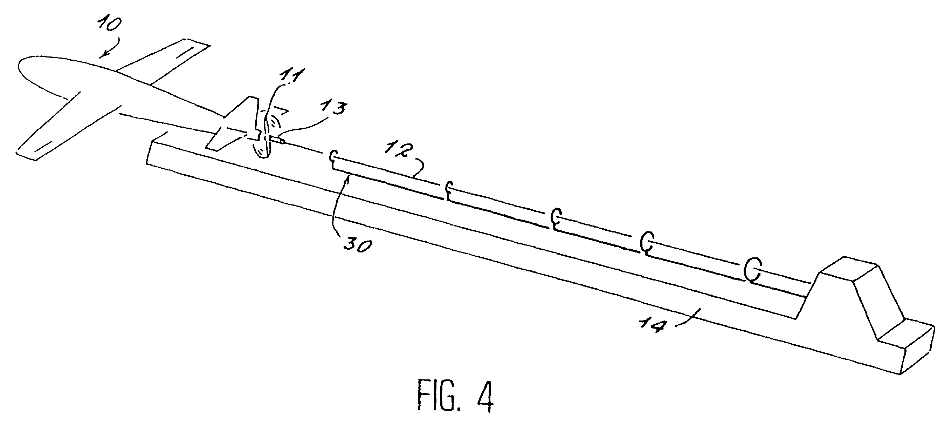

Afin de diminuer l'importance des coups de fouet en phase départ, il est possible de guider le fil de liaison 12 sur la rampe à l'aide d'un guidage télescopique 30 qui se déploie au cours du lancement ; une telle solution peut notamment être utilisée pour les missiles filoguidés. Un exemple de réalisation basé sur un système type "canne à pêche" est illustré sur la figure 4. Il est également possible d'utiliser aussi un ensemble de tubes emboîtés.

### REFERENCES

[1] FR-A-2 712 563
[2] FR-A-2 701 919
[3] FR-A-1 411 491
[4] EP-A-0 458 133
[5] EP-A-0 424 702
[6] EP-A-0 456 076
[7] US-A-5 398 588
[8] FR-A-2 654 204
[9] DE-C-38 18840

## Revendications

1. Système de télécommande d'un engin spatial filoguidé comprenant un poste de commande permettant la télécommande, à l'aide d'un fil de liaison (12), de l'engin spatial (10) mû par une hélice propulsive (11) disposée sur ledit engin et commandée par un moteur, **caractérisé en ce que** cette hélice comporte un axe creux permettant le dévidage du fil de liaison (12) à travers cet axe.

2. Système selon la revendication 1, **caractérisé en ce qu'**il comprend un conduit de guidage (13) disposé à l'intérieur à l'axe de l'hélice.

3. Système selon la revendication 1, **caractérisé en ce que** le poste de commande comporte un guidage télescopique (30).

4. Système selon la revendication 3, **caractérisé en ce que** le guidage comporte des tubes emboîtés.

5. Système selon la revendication 3, **caractérisé en ce que** le guidage comporte des anneaux de guidage.

6. Système selon l'une quelconque des revendications 1 à 5, **caractérisé en ce que** le fil de liaison est une fibre optique.

7. Système selon l'une quelconque des revendications 1 à 6, **caractérisé en ce que** l'engin spatial est un missile ou un drone.

## Patentansprüche

1. Fernlenksystem für einen draht- bzw. fadengelenkten Raumflugkörper, eine Führungsstation umfassend, von der aus der Raumflugkörper (10), vorwärtsbewegt mittels einer zu diesem Flugkörper gehörenden und durch einen Motor angetriebenen Schubschraube (11), mit Hilfe eines Verbindungsdrahts bzw. -fadens (12) femgelenkt werden kann,
**dadurch gekennzeichnet,**
**dass** diese Schraube eine Hohlwelle umfasst, die das Abspulen des Verbindungsdrahts bzw.- fadens (12) durch diese Welle hindurch ermöglicht.

2. System nach Anspruch 1, **dadurch gekennzeichnet, dass** es eine in der Schraubenwelle vorgesehene Führungsleitung (13) umfasst.

3. System nach Anspruch 1, **dadurch gekennzeichnet, dass** die Führungsstation eine Teleskopführung (30) umfasst.

4. System nach Anspruch 3, **dadurch gekennzeichnet, dass** die Führung ineinander steckende Rohre umfasst.

5. System nach Anspruch 3, **dadurch gekennzeichnet, dass** die Führung Führungsringe umfasst.

6. System nach einem der Ansprüche 1 bis 5, **dadurch gekennzeichnet, dass** der Verbindungsfaden eine optische Faser ist.

7. System nach einem der Ansprüche 1 bis 6, **dadurch gekennzeichnet, dass** der Raumflugkörper eine Rakete oder eine Drohne ist.

## Claims

1. Remote control system for a wire-guided aero-spatial device comprising a command point providing remote control, with the aid of a connecting wire (12), of the device (10) driven by a screw propeller (11) mounted on the said device and operated by a motor, **characterised in that** the said propeller has a hollow spindle allowing the connecting wire (12) to be paid out through this spindle.

2. System according to Claim 1, **characterised in that** it includes a guide tube (13) mounted inside the propeller spindle.

3. System according to Claim 1, **characterised in that** the command point has a telescopic guide (30).

4. System according to Claim 3, **characterised in that** the guide comprises nested tubes.

5. System according to Claim 3, **characterised in that** the guide comprises guide rings.

6. System according to any one of Claims 1 to 5, **characterised in that** the connecting wire is an optical fibre.

7. System according to any one of Claims 1 to 6, **characterised in that** the aero-spatial device is a missile or a drone.
